# EUROPEAN PATENT SPECIFICATION

(11) **EP 3 536 531 B1**
(45) Date of publication and mention of the grant of the patent: **21.04.2021**
(21) Application number: 19157386.4
(22) Date of filing: 15.02.2019
(51) Int. Cl.: B62J 17/10, B62M 7/12, B60L 1/02, B60K 11/04

(54) **STRADDLED VEHICLE**
SPREIZSITZ-FAHRZEUG
VÉHICULE À ENFOURCHER

(30) Priority: 07.03.2018 JP 2018040643
(43) Date of publication of application: 11.09.2019
(73) Proprietor: YAMAHA HATSUDOKI KABUSHIKI KAISHA, Iwata-shi, Shizuoka 438-8501 (JP)
(72) Inventor: TAKARA, Koji, Iwata-shi, Shizuoka 438-8501 (JP); TSUKAMOTO, Mitsuharu, Iwata-shi, Shizuoka 438-8501 (JP)
(74) Representative: Grünecker Patent- und Rechtsanwälte PartG mbB

(56) References cited:
- EP-A1- 2 769 903
- EP-A2- 0 531 200
- JP-A- 2015 193 288
- US-A1- 2006 139 939
- US-B2- 9 694 691

## Description

### TECHNICAL FIELD

The present invention relates to a straddled vehicle.

### BACKGROUND

An engine control unit has been conventionally installed in a straddled vehicle in order to control an engine. For example, Published Japanese Translation of PCT International Patent Application No. 2017-507845 describes a motorcycle in which an engine control unit is disposed between a side box and a storage box. Japanese Patent Application Publication No. 2015-193288 discloses the features of the preamble of claim 1 and proposes to provide a vehicle including a harness holding part which deals with change in a component without changing the vehicle body frame side even if change occurs in a direction of a harness being pulled out from the component mounted on the vehicle. A fixing part is fixed to a stay part extending from a head pipe of a motor cycle to the front side and a control unit is supported on the fixing part. A connector coupling part is provided at the control unit. A harness extending from the connector is held by a harness holding part. The harness holding part is fixed to the control unit side by the connector being coupled to the connector coupling part.

United States Patent Application Publication No. 2006/0139939 A1 proposes a vehicle component assembly for a straddle type vehicle (e.g., a motor scooter) that can increase the space for internal components in the front portion of the vehicle. The assembly comprises a front portion of a vehicle body cover located at a front portion of the straddle type vehicle. A vehicle component and a vehicle component holder are disposed within the front portion of the vehicle body cover between a head pipe and a headlight of the vehicle.

European Patent Application Publication No.2769 903 A proposes to enable effectively utilizing space on the upside of a battery in battery layout structure of a saddle-ride type vehicle. In battery layout structure of a saddle-ride type vehicle provided with a head pipe that forms the front of a body frame and steerably journals a front wheel, a fore cover that covers a circumference of the head pipe and a battery provided in front of the head pipe and inside the fore cover, the battery is arranged so that battery terminals face forward.

United States Patent Application Publication No. 2006/0139939 A1 discloses an electric vehicle enables cooling performance for a DC/DC converter to be improved and includes a steering mechanism supporting a front wheel, a head pipe supporting the steering mechanism, a frame member extending from the head pipe backward and downward, a front cowl covering the head pipe, the front cowl hanging and extending to a lower-half of the front wheel, an electric motor rotating and drive the rear wheel, a DC/DC converter disposed in the frame member behind the front wheel in a posture facing a travelling direction to convert voltage, and a heat radiation fin extending in a vehicle vertical direction, the heat radiation fin being provided in a front face of the DC/DC converter, the front face facing the front wheel. The front cowl expands to left and right sides of the DC/DC converter in the vehicle width direction to collect travelling wind to the heat radiation fin.

European Patent Application Publication No. 0 531 200 A discloses a straddled vehicle according to the preamble of claim 1.

### SUMMARY

In recent years, there has been a drawback that the amount of heat generated by the engine control unit is increased due to high functionality or multi-functionality of controlling the straddled vehicle. However, heat is easily trapped in the aforementioned space between the side box and the storage box. This space is located below a seat, and hence, the trapped heat possibly causes deterioration in ride comfort of a rider. Therefore, when the engine control unit is disposed between the side box and the storage box, a special structure could be required as anti-heat countermeasure.

Now, the inventor of the present invention focused on the inner space of a head pipe storage portion covering the surroundings of a head pipe. Any heat source, the temperature of which gets high just like an engine, is not provided in the surroundings of the head pipe storage portion.

Moreover, the inventor focused on an opened portion provided in a lower part of the head pipe storage portion. The opened portion is provided in the head pipe storage portion such that right and left shock absorbers penetrate therethrough. The inventor conceived of enhancing performance of cooling the engine control unit by utilizing air flowing back and forth between the interior and the outside of the head pipe storage portion through the opened portion.

For this purpose, the inventor firstly conceived of disposing the engine control unit in front of the head pipe while the posture of the engine control unit is set as follows. The engine control unit includes a wide heat radiating surface arranged orthogonally to a thickness direction thereof. The inventor conceived of setting the posture of the engine control unit such that the heat radiating surface is arranged along the slant of the head pipe as seen in a vehicle side view. This is because the inventor expected that the engine control unit can be disposed in a close position to the center of gravity of a vehicle located behind the head pipe by attaching the engine control unit as described above.

However, the inventor was concerned that heat radiation from the engine control unit does not successfully work in a scooter-type vehicle. Specifically, in the scooter-type vehicle, the head pipe storage portion includes a back cover that is at least in part disposed behind the head pipe. The back cover includes a middle portion, a right lateral portion and a left lateral portion. The middle portion overlaps the head pipe as seen in a rear view. The right lateral portion is located rightward of the middle portion, whereas the left lateral portion is located leftward of the middle portion. In some type of scooter-type vehicle, the right and left lateral portions are located further forward of the rear edge of the head pipe than the middle portion. Therefore, the inventor was concerned that the space between the engine control unit and the back cover is reduced by attaching the engine control unit in the aforementioned posture. When the space between the engine control unit and the back cover is reduced, it is concerned that traveling wind, taken into the inner space of the head pipe storage portion through the opened portion, does not sufficiently flow to lateral sides of the head pipe, and this disables sufficient heat radiation from the engine control unit.

It is an object of the present invention to enhance heat radiation performance of an engine control unit. In more detail, it is an object of the present invention to enhance heat radiation performance of the engine control unit by effectively using a small inner space of a head pipe storage portion.

A straddled vehicle according to the invention includes a vehicle body frame, a steering device, an engine, a head pipe storage portion and an engine control unit. The vehicle body frame includes a head pipe. The steering device is supported by the head pipe. The engine is disposed below and backward of the head pipe. The head pipe storage portion includes a front cover and a back cover. The front cover is at least in part disposed in front of the head pipe. The back cover is at least in part disposed behind the head pipe. The front cover and the back cover form therebetween an inner space in which the head pipe is accommodated. The engine control unit controls the engine.

The head pipe extends backward from a lower opening end thereof to an upper opening end thereof. The head pipe storage portion includes an opened portion. The opened portion is provided below the head pipe. The steering device extends outward from the inner space through the opened portion. The back cover includes a middle portion, a left lateral portion and a right lateral portion. The middle portion overlaps the head pipe as seen in a rear view. The left lateral portion is located laterally leftward of the middle portion. The right lateral portion is located laterally rightward of the middle portion. At least one of the left lateral portion and the right lateral portion is located forward of a rear end edge of the head pipe.

The engine control unit is disposed in front of the head pipe in the inner space of the head pipe storage portion. The engine control unit overlaps at least part of the head pipe as seen in a vehicle front view. The engine control unit is dimensioned to be greater in both a length direction thereof and a width direction thereof than in a thickness direction thereof, and includes a main heat radiating surface. The main heat radiating surface extends in both the length direction and the width direction as seen in the thickness direction. The main heat radiating surface extends in a direction intersecting with a direction of an axis of the head pipe as seen in a vehicle side view.

In the straddled vehicle according to the invention, air, flowing into the inner space of the head pipe storage portion through the opened portion, flows upward along the head pipe, and is thus likely to flow in the direction of the axis of the head pipe. Therefore, the main heat radiating surface of the engine control unit extends in the direction intersecting with the direction of the axis of the head pipe as seen in the vehicle side view, whereby the air, flowing through the opened portion, is likely to strike the main heat radiating surface. Accordingly, the engine control unit can be enhanced in heat radiating performance.

The axis of the head pipe extends backward and upward as seen in the vehicle side view. The main heat radiating surface extends forward and upward as seen in the vehicle side view. In this case, the air, flowing backward and upward from the opened portion, is likely to strike the main heat radiating surface of the engine control unit. Accordingly, the engine control unit can be further enhanced in heat radiating performance. The thickness direction extends forward and downward as seen in the vehicle side view.

The engine control unit may further include a lateral surface extending in the thickness direction of the engine control unit. An area of the main heat radiating surface projected in a normal direction of the main heat radiating surface may be greater than an area of the lateral surface projected in a normal direction of the lateral surface. In this case, the main heat radiating surface, having a large projected area, extends in the direction intersecting with the direction of the axis of the head pipe. Accordingly, the engine control unit can be further enhanced in heat radiating performance by the air flowing thereto through the opened portion.

The axis of the head pipe may extend backward and upward as seen in the vehicle side view. The main heat radiating surface may extend forward and upward as seen in the vehicle side view. In this case, the air, flowing backward and upward, is likely to strike the main heat radiating surface having a large projected area. Accordingly, the engine control unit can be further enhanced in heat radiating performance by the air flowing thereto through the opened portion.

The straddled vehicle may further include an electric cable connected to the engine control unit. The lateral surface may include a connector to which the electric cable is connected. In this case, handling of the electric cable is made easy.

The main heat radiating surface may be a front or rear surface of the engine control unit. The lateral surface may be a lower surface connected to a lower end of the main heat radiating surface. In this case, it is possible to easily employ the layout of the electric cable extending downward from the lateral surface. Accordingly, handling of the electric cable is made easy.

The main heat radiating surface may have a raised and recessed shape. In this case, the surface area of the main heat radiating surface is increased, whereby the engine control unit can be further enhanced in heat radiating performance.

The main heat radiating surface may be dimensioned to be greater in the width direction than in the length direction. The engine control unit may be disposed such that the width direction of the main heat radiating surface is oriented in the vehicle width direction. In this case, the engine control unit can be compactly disposed inside the head pipe storage portion in the vehicle up-and-down direction.

An upper end of the engine control unit may be located below the upper opening end of the head pipe. In this case, the engine control unit can be compactly disposed inside the head pipe storage portion in the vehicle up-and-down direction.

The straddled vehicle may further include a headlight disposed forward of the head pipe. The engine control unit may be disposed between the head pipe and the headlight in a vehicle back-and-forth direction. The engine control unit may at least in part overlap the headlight in the vehicle front view. In this case, the inner space of the head pipe storage portion is reduced by the headlight, whereby deterioration in heat radiating performance is greatly concerned. Therefore, the significance of the present invention is highly appreciated.

The straddled vehicle may further include a stay for fixing the headlight to the head pipe. The engine control unit may be fixed to the stay. In this case, attachment of the headlight and the engine control unit can be made by the stay commonly used.

The straddled vehicle may further include a starter motor for starting the engine. The engine control unit may include a command unit and a voltage control unit. The command unit may output a command signal to the engine. The voltage control unit may be connected to the starter motor. In this case, the amount of heat generated by the engine control unit is increased due to heat generated by the voltage control unit. However, the engine control unit can be efficiently cooled by the main heat radiating surface.

The command unit and the voltage control unit may be disposed in alignment in either the width direction or the length direction of the main heat radiating surface. In this case, wiring between the command unit and the voltage control unit is made easier than when the command unit and the voltage control unit are laminated in the width direction. Additionally, the engine control unit is provided with a large surface, whereby it can be made easy for air flowing through the opened portion to strike the engine control unit.

The back cover may include an overlapping portion overlapping the engine control unit as seen in the rear view. The overlapping portion may be at least in part located forward of the rear end edge of the head pipe. In this case, the space directly backward of the engine control unit is small. Therefore, it is difficult for traveling wind to pass therethrough, and also, the space for heat radiation is small. Hence, deterioration in heat radiating performance is greatly concerned. Therefore, the significance of the present invention is highly appreciated.

The straddled vehicle may further include a fuel supply portion provided in either the right lateral portion or the left lateral portion. When the fuel supply portion is provided in the right or left lateral portion, it is required to provide a space for accessing the fuel supply portion in the surroundings of the fuel supply portion. Hence, the right or left lateral portion, in part, is preferably disposed forward of the fuel supply portion. In this case, the space between the front cover and part of the right or left lateral portion is reduced, whereby deterioration in heat radiating performance is greatly concerned. Therefore, the significance of the present invention is highly appreciated.

The straddled vehicle may further include a main switch provided in either the right lateral portion or the left lateral portion. When the main switch is provided in the right or left lateral portion, it is required to provide a space for accessing the main switch in the surroundings of the main switch. Hence, the right or left lateral portion, in part, is preferably disposed forward of the main switch. In this case, the space between the front cover and part of the right or left lateral portion is reduced, whereby deterioration in heat radiating performance is greatly concerned. Therefore, the significance of the present invention is highly appreciated.

A straddled vehicle according to another aspect may include a vehicle body frame, an engine, a steering device, a front wheel, a front brake, a head pipe storage portion, an engine control unit and a fluid pressure unit for ABS (Anti-lock Brake System). The vehicle body frame may include a head pipe. The engine may be disposed below and backward of the head pipe. The steering device may be supported by the head pipe. The front wheel may be supported by the steering device. The front brake may brake the front wheel. The head pipe storage portion may be disposed in front of and behind the head pipe, and may overlap the head pipe as seen in a vehicle front view. The engine control unit may be disposed inside the head pipe storage portion, and may control the engine. The fluid pressure unit may control the front brake.

The steering device may include a steering shaft, an under bracket, a left shock absorber and a right shock absorber. The steering shaft may be inserted into the head pipe. The under bracket may be connected to a lower end of the steering shaft, and may be disposed below the head pipe. The right and left shock absorbers may be connected at upper ends thereof to the under bracket. The head pipe storage portion may include an opened portion. The opened portion may be at least in part disposed below the head pipe. The steering device may be disposed to pass through the opened portion. The engine control unit may be disposed in front of the head pipe, and may overlap at least part of the head pipe as seen in the vehicle front view. The fluid pressure unit may be disposed inside the head pipe storage portion.

In the straddled vehicle according to the present aspect, a wide space located right and left of the head pipe can be utilized as a space for discharging heat generated by the engine control unit and that generated by the fluid pressure unit. Accordingly, each of the engine control unit and the fluid pressure unit can be enhanced in heat radiating performance. Additionally, each of the engine control unit and the fluid pressure unit can be cooled by the air flowing thereto through the opened portion. Accordingly, each of the engine control unit and the fluid pressure unit can be further enhanced in heat radiating performance.

A lower end of the fluid pressure unit may be located above a lower end of the engine control unit. In this case, the fluid pressure unit can be disposed inside the head pipe storage portion without hindering the engine control unit from being cooled by the air flowing thereto through the opened portion.

An upper end of the fluid pressure unit may be located above an upper end of the engine control unit. In this case, the fluid pressure unit can be disposed inside the head pipe storage portion without hindering the engine control unit from being cooled by the air flowing thereto through the opened portion.

The fluid pressure unit may be disposed in front of the head pipe, and may overlap at least part of the head pipe as seen in the vehicle front view. In this case, the fluid pressure unit can be compactly disposed inside the head pipe storage portion.

The fluid pressure unit may be disposed behind the engine control unit, and may overlap the engine control unit as seen in the vehicle front view. In this case, the engine control unit and the fluid pressure unit can be compactly disposed inside the head pipe storage portion.

The fluid pressure unit may overlap at least part of the engine control unit as seen in a vehicle top view. In this case, the fluid pressure unit and the engine control unit can be compactly disposed inside the head pipe storage portion.

The fluid pressure unit may overlap at least part of the head pipe as seen in the vehicle top view. In this case, the fluid pressure unit can be compactly disposed inside the head pipe storage portion.

An axis of the head pipe may extend backward and upward as seen in a vehicle side view. A heat radiating surface of the engine control unit may extend forward and upward as seen in the vehicle side view. The fluid pressure unit may be disposed between the head pipe and the engine control unit in a vehicle back-and-forth direction. In this case, the fluid pressure unit can be compactly disposed inside the head pipe storage portion.

### BRIEF DESCRIPTION OF THE DRAWINGS

FIG 1 is a side view of a straddled vehicle according to a preferred embodiment.
FIG. 2 is a front view of the straddled vehicle.
FIG 3 is a perspective view of a front portion of the straddled vehicle.
FIG 4 is an enlarged side view of the front portion of the straddled vehicle.
FIG 5 is a perspective view of an engine control unit.
FIG 6 is a front view of the engine control unit.
FIG 7 is a rear view of the engine control unit.
FIG 8 is a side view of the engine control unit.
FIG 9 is a perspective view of a head pipe storage portion.
FIG 10 is a rear view of the head pipe storage portion.
FIG 11 is a cross-sectional view of FIG. 4 taken along line XI-XI.
FIG 12 is a cross-sectional view of FIG 4 taken along line XII-XII.
FIG 13 is a side view of a structure in the interior of the head pipe storage portion.
FIG 14 is a top view of the structure in the interior of the head pipe storage portion.
FIG 15 is a side view of the structure in the interior of the head pipe storage portion from which a headlight is omitted.
FIG 16 is a front view of the structure in the interior of the head pipe storage portion from which the headlight is omitted.
FIG 17 is an enlarged side view of a front portion of a straddled vehicle according to first modification.
FIG 18 is an enlarged side view of a front portion of a straddled vehicle according to second modification.
FIG 19 is an enlarged side view of a front portion of a straddled vehicle according to third modification.
FIG 20 is an enlarged side view of a front portion of a straddled vehicle according to fourth modification.

### DETAILED DESCRIPTION OF THE PREFERRED EMBODIMENTS

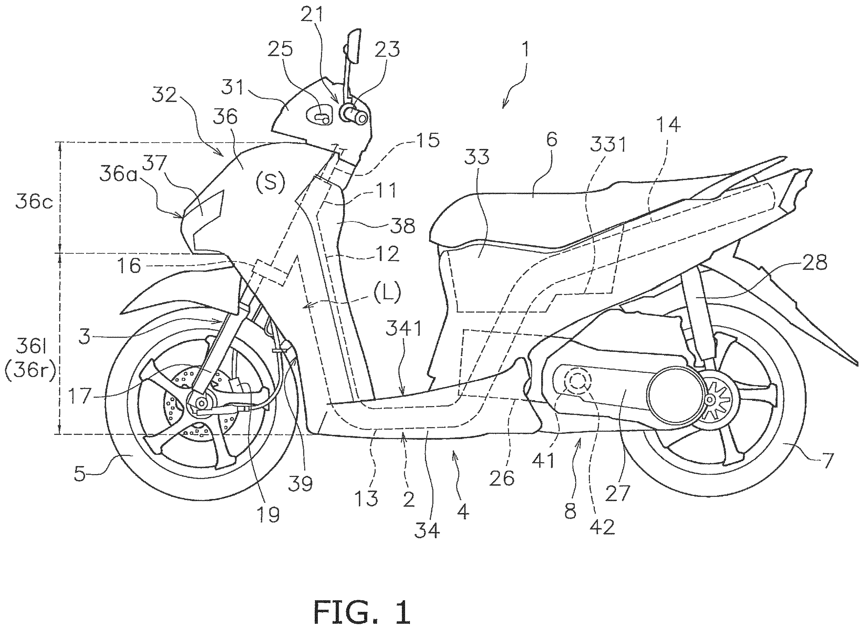

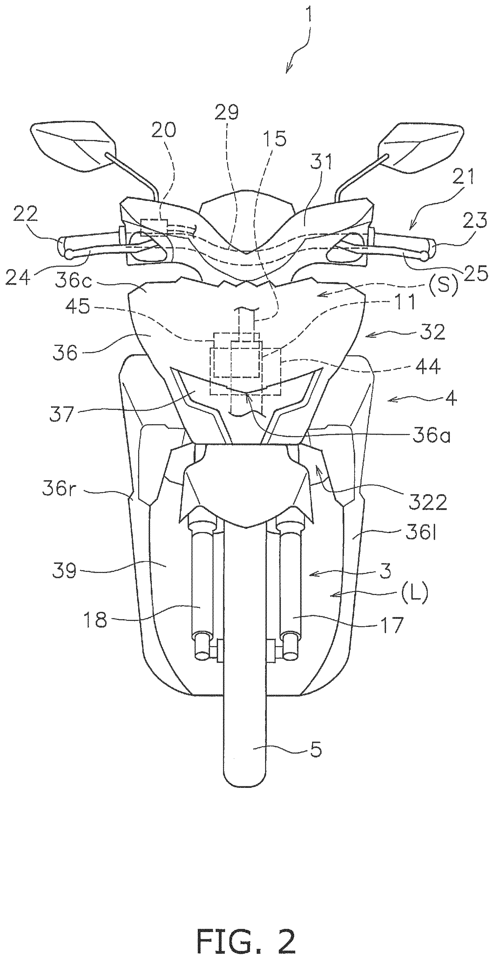

A straddled vehicle 1 according to a preferred embodiment will be hereinafter explained with reference to drawings. FIG. 1 is a side view of the straddled vehicle 1. FIG 2 is a front view of the straddled vehicle 1. The straddled vehicle 1 according to the present preferred embodiment is a scooter-type vehicle. As shown in FIG 1, the straddled vehicle 1 includes a vehicle body frame 2, a steering device 3, a vehicle body cover 4, a front wheel 5, a seat 6, a rear wheel 7 and a power unit 8.

It should be noted that in the present specification, a back-and-forth direction, an up-and-down direction and a right-and-left direction of the straddled vehicle 1 refer to the back-and-forth direction, the up-and-down direction and the right-and-left direction seen from a rider riding on the straddled vehicle 1. Additionally, the back-and-forth direction not only indicates directions arranged in parallel to the back-and-forth direction of the straddled vehicle 1, but also encompasses directions tilting within an angular range of ±45 degrees with respect to the back-and-forth direction of the straddled vehicle 1. In other words, a given direction closer to the back-and-forth direction than to the right-and-left direction and the up-and-down direction is classified as the back-and-forth direction.

Likewise, the up-and-down direction encompasses directions tilting within an angular range of ±45 degrees with respect to the up-and-down direction of the straddled vehicle 1. In other words, a given direction closer to the up-and-down direction than to the back-and-forth direction and the right-and-left direction is classified as the up-and-down direction.

Moreover, the right-and-left direction encompasses directions tilting within an angular range of ±45 degrees with respect to the right-and-left direction of the straddled vehicle 1. In other words, a given direction closer to the right-and-left direction than to the back-and-forth direction and the up-and-down direction is classified as the right-and-left direction.

The vehicle body frame 2 includes a head pipe 11, a down frame 12, a lower frame 13 and a rear frame 14. As seen in a vehicle side view, the axis of the head pipe 11 extends backward and upward. The head pipe 11 backwardly extends from a lower opening end 11a to an upper opening end 11b. The down frame 12 extends downward from the head pipe 11. In more detail, as seen in the vehicle side view, the down frame 12 is connected to a rear end edge 11c of the head pipe 11 backwardly extending from the lower opening end 11a to the upper opening end 11b. The lower frame 13 is connected to a lower portion of the down frame 12. The lower frame 13 extends backward from the lower portion of the down frame 12. The rear frame 14 is connected to the lower frame 13. The rear frame 14 extends backward and upward from a rear portion of the lower frame 13.

The steering device 3 is supported by the head pipe 11. The steering device 3 includes a steering shaft 15, an under bracket 16, a left shock absorber 17 and a right shock absorber 18. The steering shaft 15 is inserted into the head pipe 11. The steering shaft 15 is supported by the head pipe 11 and is thereby turnable right and left. The under bracket 16 is connected to the lower end of the steering shaft 15. The under bracket 16 is disposed below the head pipe 11.

The right and left shock absorbers 18 and 17 are connected at the upper ends thereof to the under bracket 16. The front wheel 5 is rotatably supported by the right and left shock absorbers 18 and 17. A front brake 19 is attached to the front wheel 5. The front brake 19 brakes the front wheel 5. The front brake 19 is, for instance, a disc brake.

The steering shaft 15 is connected at an upper portion thereof to a handle 21. As shown in FIG 2, the handle 21 includes a first grip 22, a second grip 23 and a handlebar 29. The first and second grips 22 and 23 are attached to the both ends of the handlebar 29. In the present preferred embodiment, the first grip 22 is disposed rightward of a handle cover 31 to be described. The second grip 23 is disposed leftward of the handle cover 31.

A first lever member 24 is disposed in front of the first grip 22. The first lever member 24 is a brake lever. A master cylinder 20 is connected to the first lever member 24. A second lever member 25 is disposed in front of the second grip 23. The second lever member 25 is a brake lever.

The vehicle body cover 4 includes the handle cover 31, a head pipe storage portion 32, a rear cover 33 and a lower cover 34. The handle cover 31 covers the front and rear sides of the handle 21. A meter panel, including a speedometer and so forth, is attached to the upper surface of the handle cover 31.

The head pipe storage portion 32 is disposed below the handle cover 31. The head pipe storage portion 32 covers the surroundings of the head pipe 11 and the down frame 12. The head pipe storage portion 32 is disposed in front of and behind the head pipe 11. The head pipe storage portion 32 is disposed in front of and behind the down frame 12. The head pipe storage portion 32 overlaps the head pipe 11 as seen in a vehicle front view. The head pipe storage portion 32 is connected at a lower portion thereof to the lower cover 34. The head pipe storage portion 32 includes a front cover 36, a back cover 38 and a mud cover 39.

The front cover 36 is disposed below the handle cover 31 in a vehicle up-and-down direction. The front cover 36, at least in part, is disposed in front of the head pipe 11. As seen in the vehicle front view, the front cover 36 overlaps the head pipe 11.

A headlight 37 is disposed in the front cover 36. The headlight 37 is disposed in front of the head pipe 11. The headlight 37 overlaps the head pipe 11 in the vehicle front view. The headlight 37 composes part of the head pipe storage portion 32. The headlight 37 and flashers may not be disposed in the head pipe storage portion 32, and alternatively, may be disposed in, for instance, the handle cover 31.

The front cover 36 includes a middle cover portion 36c, a right cover portion 36r and a left cover portion 36l. The middle cover portion 36c is disposed above the front wheel 5. The right cover portion 36r extends downward from a right lateral portion of the middle cover portion 36c. The left cover portion 36l extends downward from a left lateral portion of the middle cover portion 36c. The middle cover portion 36c includes a distal end portion 36a provided as an attachment hole for the headlight 37. The middle cover portion 36c extends backward from the distal end portion 36a, while being directed upward. Additionally, the middle cover portion 36c extends backward from the distal end portion 36a, while being directed upward and laterally rightward and leftward.

The mud cover 39 is disposed behind the front wheel 5. The mud cover 39 overlaps the front wheel 5 as seen in the front view. The mud cover 39 is disposed in front of the down frame 12. The mud cover 39, at least in part, overlaps the down frame 12 as seen in the front view (see FIG 2). The mud cover 39 is connected to the right cover portion 36r and the left cover portion 36l.

The back cover 38 is disposed behind the front cover 36. The back cover 38, at least in part, is disposed behind the head pipe 11. The back cover 38, at least in part, overlaps the head pipe 11 as seen in the front view (see FIG 2). An inner space S is formed between a middle portion 36c of the front cover 36 and the back cover 38 in order to accommodate the head pipe 11. A lower space L is formed between the mud cover 39 and the back cover 38 in order to accommodate the down frame 12. The back cover 38 will be described below.

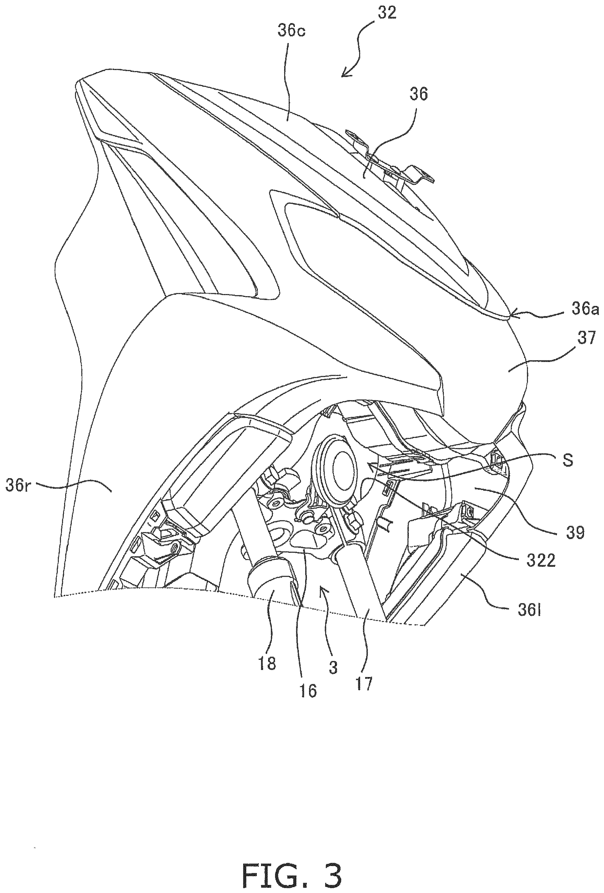

FIG 3 is a perspective view of a front portion of the straddled vehicle 1. As shown in FIGS. 2 and 3, the head pipe storage portion 32 includes an opened portion 322. The opened portion 322 is formed in a lower portion of the inner space S of the head pipe storage portion 32, and communicates with the inner space S. The opened portion 322 is opened downward. The steering device 3 is disposed while passing through the opened portion 322. The opened portion 322 in part is delimited by the headlight 37. The opened portion 322 is disposed above an uppermost portion of the front wheel 5.

As shown in FIG 1, the rear cover 33 covers the surroundings of the rear frame 14. The seat 6 is disposed above the rear cover 33. The seat 6 is disposed backward of the head pipe 11. A storage box 331 is disposed inside the rear cover 33. The storage box 331 is disposed below the seat 6.

The lower cover 34 is disposed between the head pipe storage portion 32 and the rear cover 33. The lower cover 34 covers the surroundings of the lower frame 13. The upper surface of the lower cover 34 includes a footboard 341. The footboard 341 is disposed below and forward of the seat 6. The footboard 341 is disposed above the lower frame 13. The footboard 341 is provided for allowing a rider to put his/her feet thereon. The footboard 341 has an entirely flat shape in the vehicle width direction. However, the footboard 341 may not have a flat shape. For example, a center tunnel portion may be provided in the middle of the footboard 341. The center tunnel portion has an upwardly protruding shape and extends in the back-and-forth direction.

The power unit 8 is disposed below the seat 6. The power unit 8 is pivotably supported by the vehicle body frame 2. The power unit 8 supports the rear wheel 7 such that the rear wheel 7 is rotatable. The rear wheel 7 is supported by the vehicle body frame 2 through a rear suspension 28. The power unit 8 includes an engine 26 and a transmission 27.

The engine 26 is disposed backward and below the head pipe 11. The engine 26 is disposed backward of the head pipe storage portion 32. The engine 26 is disposed inside the rear cover 33. The engine 26 is disposed below the seat 6. In other words, the engine 26 overlaps the seat 6 as seen in a vehicle plan view. The engine 26 is disposed below the storage box 331.

A starter motor 41 is attached to the engine 26. The starter motor 41 starts the engine 26. The starter motor 41 is attached to a crankshaft 42 of the engine 26. In the present preferred embodiment, the starter motor 41 is a starter motor generator that functions as both a starter motor for starting the engine 26 and a power generator for generating electricity by the driving force of the engine 26.

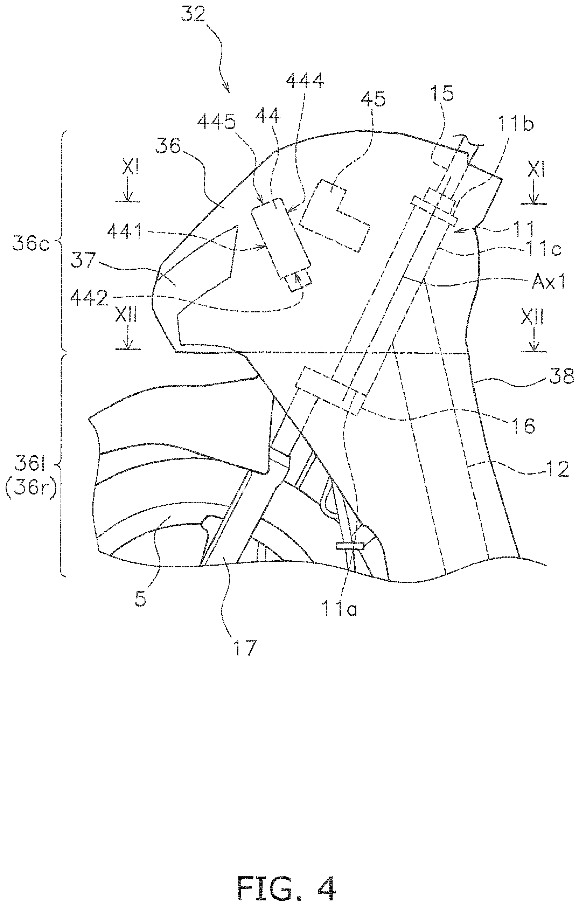

FIG 4 is an enlarged side view of the front portion of the straddled vehicle 1. As shown in FIG 4, the straddled vehicle 1 includes an engine control unit 44. The engine control unit 44 is disposed in the inner space S of the head pipe storage portion 32. In more detail, the engine control unit 44 is disposed in the inner space S formed between the middle cover portion 36c of the front cover 36 and the back cover 38. The engine control unit 44 controls the engine 26. For example, the engine control unit 44 controls fuel injection and ignition timing in the engine 26.

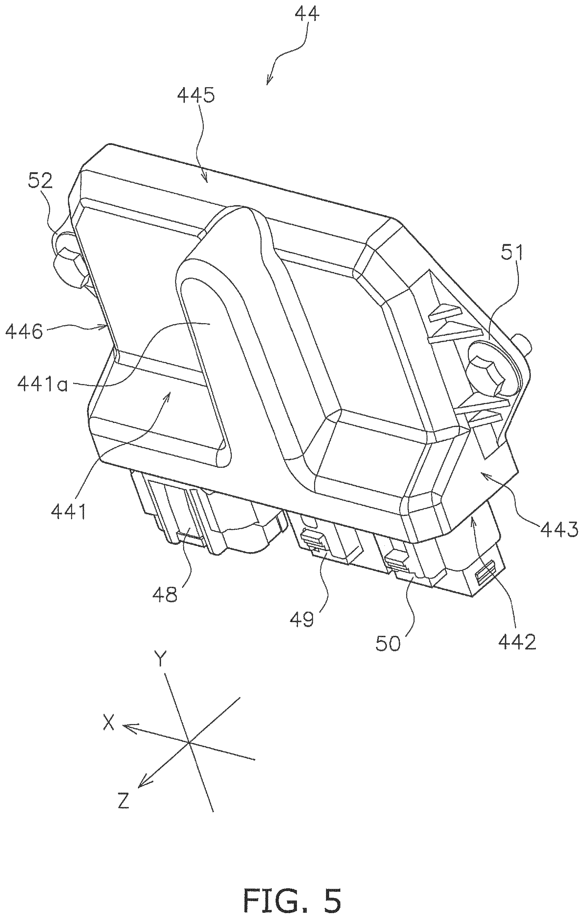

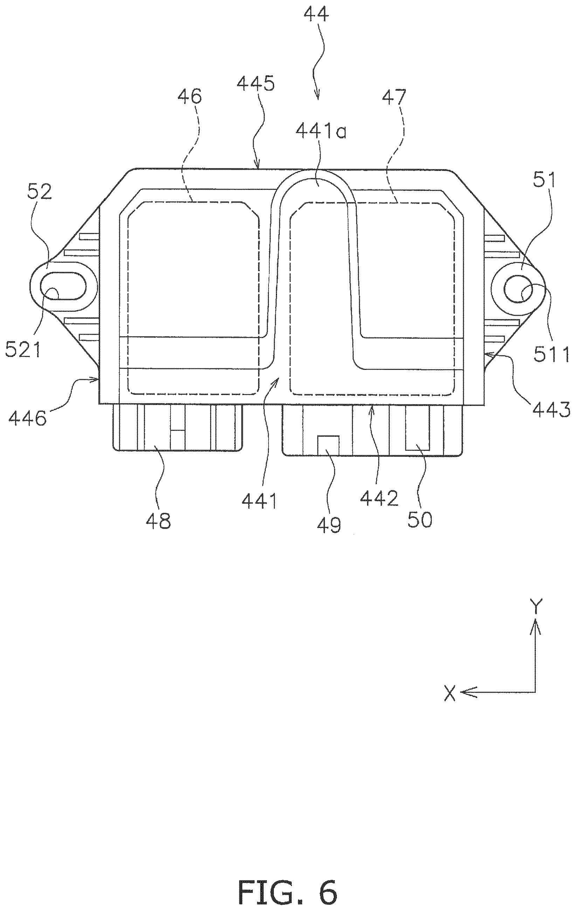

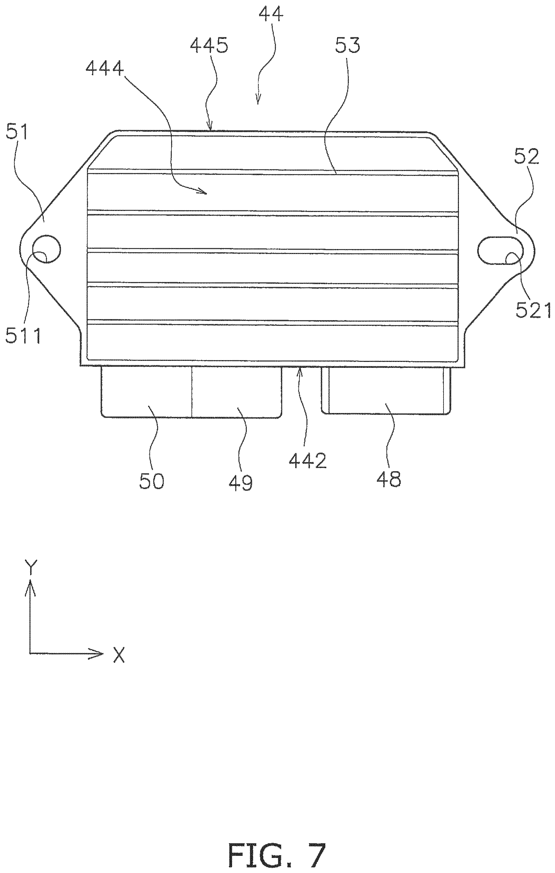

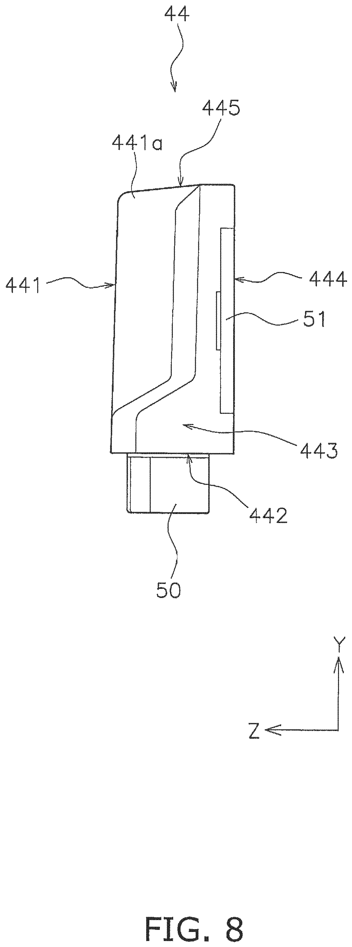

FIG 5 is a perspective view of the engine control unit 44. FIG. 6 is a front view of the engine control unit 44. FIG 7 is a rear view of the engine control unit 44. FIG 8 is a side view of the engine control unit 44. As shown in FIGS. 5 to 7, the engine control unit 44 is dimensioned to be greater in both a length direction (Y) thereof and a width direction (X) thereof than in a thickness direction (Z) thereof. The engine control unit 44 is dimensioned to be greater in the width direction (X) thereof than in the length direction (Y) thereof. Here, the thickness direction (Z) of the engine control unit 44 refers to the extending direction of the smallest one of the dimensions of the engine control unit 44 in the three-dimensional Cartesian coordinate system (X, Y, Z).

The engine control unit 44 is disposed in front of the head pipe 11. As shown in FIG. 2, the engine control unit 44 overlaps at least part of the head pipe 11 as seen in the vehicle front view.

The engine control unit 44 includes a first heat radiating surface 441 and a second heat radiating surface 444. The first heat radiating surface 441 is the front surface of the engine control unit 44. The second heat radiating surface 444 is located on the opposite side of the first heat radiating surface 441. The second heat radiating surface 444 is the rear surface of the engine control unit 44.

The engine control unit 44 includes a first lateral surface 442, a second lateral surface 443, a third lateral surface 445 and a fourth lateral surface 446. The first lateral surface 442 is connected to the lower end of the first heat radiating surface 441. The first lateral surface 442 is the lower surface of the engine control unit 44. The second lateral surface 443 is the left lateral surface of the engine control unit 44. The third lateral surface 445 is connected to the upper end of the first heat radiating surface 441. The third lateral surface 445 is the upper surface of the engine control unit 44. The fourth lateral surface 446 is the right lateral surface of the engine control unit 44.

Each of the first and second heat radiating surfaces 441 and 444 extends in the length direction (Y) and the width direction (X) of the engine control unit 44. Each of the first and second heat radiating surfaces 441 and 444 has a shape dimensioned to be greater in the width direction (X) than in the length direction (Y). Each of the first and third lateral surfaces 442 and 445 extends in the width direction (X) and the thickness direction (Z) of the engine control unit 44. Each of the first and third lateral surfaces 442 and 445 has a shape dimensioned to be greater in the width direction (X) than in the thickness direction (Z). Each of the second and fourth lateral surfaces 443 and 446 extends in the length direction (Y) and the thickness direction (Z) of the engine control unit 44. Each of the second and fourth lateral surfaces 443 and 446 has a shape dimensioned to be greater in the length direction (Y) than in the thickness direction (Z).

An area of the first heat radiating surface 441 projected in a normal direction of the first heat radiating surface 441 is greater than that of the first lateral surface 442 projected in a normal direction of the first lateral surface 442. The area of the first heat radiating surface 441 projected in the normal direction of the first heat radiating surface 441 is also greater than that of the second lateral surface 443 projected in a normal direction of the second lateral surface 443. It should be noted that the second heat radiating surface 444 has a projected area similar to that of the first heat radiating surface 441. The third lateral surface 445 has a projected area similar to that of the first lateral surface 442. The fourth lateral surface 446 has a projected area similar to that of the second lateral surface 443.

As shown in FIG. 6, the engine control unit 44 includes a command unit 46 and a voltage control unit 47. The command unit 46 outputs a command signal to the engine 26. The voltage control unit 47 is, for instance, a regulator. The voltage control unit 47 is connected to the starter motor 41. The voltage control unit 47 rectifies the electricity generated by the starter motor 41 and controls the voltage of the electricity. The command unit 46 and the voltage control unit 47 are disposed in alignment in the width direction (X) of the engine control unit 44.

The engine control unit 44 includes a plurality of connectors 48 to 50. The plural connectors 48 to 50 are attached to the first lateral surface 442. The plural connectors 48 to 50 are disposed in alignment in the width direction (X) of the engine control unit 44. The plural connectors 48 to 50 protrude downward from the first lateral surface 442.

The plural connectors 48 to 50 include a first connector 48, a second connector 49 and a third connector 50. The first connector 48 is connected to the command unit 46. The second and third connectors 49 and 50 are connected to the voltage control unit 47.

The engine control unit 44 includes a first attachment portion 51 and a second attachment portion 52. The first and second attachment portions 51 and 52 are provided on the both lateral surfaces of the engine control unit 44. The first and second attachment portions 51 and 52 include holes 511 and 521 that bolts are inserted therethrough, respectively.

As shown in FIG 5, the first heat radiating surface 441 includes a raised portion 441a protruding in the thickness direction (Z). With the raised portion 441a, the first heat radiating surface 441 has a raised and recessed shape. As shown in FIG 7, the engine control unit 44 includes a plurality of ribs 53. The plural ribs 53 are provided on the second heat radiating surface 444. With the plural ribs 53, the second heat radiating surface 444 has a raised and recessed shape. The plural ribs 53 extend in the width direction (X). It should be noted that in FIG 7, reference numeral 53 is assigned to only one of the plural ribs 53 without being assigned to the other ribs 53.

As shown in FIG 4, the engine control unit 44 is disposed in front of the head pipe 11.

As seen in the vehicle side view, the engine control unit 44 is disposed such that the thickness direction (Z) thereof is oriented in a direction slanting with respect to a direction arranged vertically to an axis Ax1 of the head pipe 11. As seen in the vehicle side view, the thickness direction (Z) of the engine control unit 44 extends forward and downward.

As shown in FIG. 2, the engine control unit 44 at least in part overlaps the head pipe 11 in the vehicle front view. The engine control unit 44 is disposed such that the width direction (X) thereof is oriented in the vehicle width direction. In other words, the width direction (X) of the engine control unit 44 extends in the vehicle width direction.

As shown in FIG 2, the engine control unit 44 at least in part overlaps the headlight 37 in the vehicle front view. As seen in the vehicle front view, the upper end of the engine control unit 44 is located above that of the headlight 37. As seen in the vehicle front view, the lower end of the engine control unit 44 is located below the upper end of the headlight 37. As seen in the vehicle front view, the lower end of the engine control unit 44 is located above that of the headlight 37.

As seen in the vehicle side view, the first heat radiating surface 441 of the engine control unit 44 extends forward and upward. As seen in the vehicle side view, the first heat radiating surface 441 extends in a direction intersecting with the direction of the axis Ax1 (hereinafter referred to as "axis direction (Ax1)") of the head pipe 11. As seen in the vehicle side view, the first heat radiating surface 441 slants with respect to the axis direction (Ax1) of the head pipe 11. As seen in the vehicle side view, the first heat radiating surface 441 extends forward and upward.

As seen in the vehicle front view, the first heat radiating surface 441 extends in the vehicle width direction. As seen in the vehicle front view, the first lateral surface 442 extends in the vehicle width direction. As seen in the vehicle side view, the first lateral surface 442 extends in a direction different from the extending direction of the first heat radiating surface 441. As seen in the vehicle side view, the first lateral surface 442 extends forward and downward. As seen in the vehicle side view, the first lateral surface 442 slants with respect to the axis direction (Ax1) of the head pipe 11.

It should be noted that the second heat radiating surface 444 of the engine control unit 44 is disposed in a similar orientation to the first heat radiating surface 441. The third lateral surface 445 of the engine control unit 44 is disposed in a similar orientation to the first lateral surface 442. The fourth lateral surface 446 of the engine control unit 44 is disposed in a similar orientation to the second lateral surface 443. It should be noted that these surfaces may be changed in orientation.

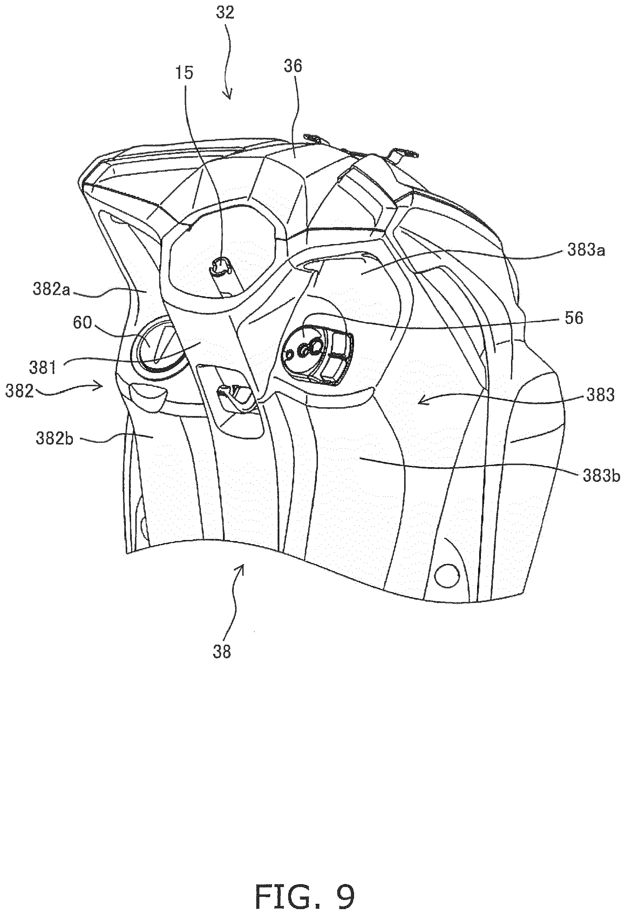

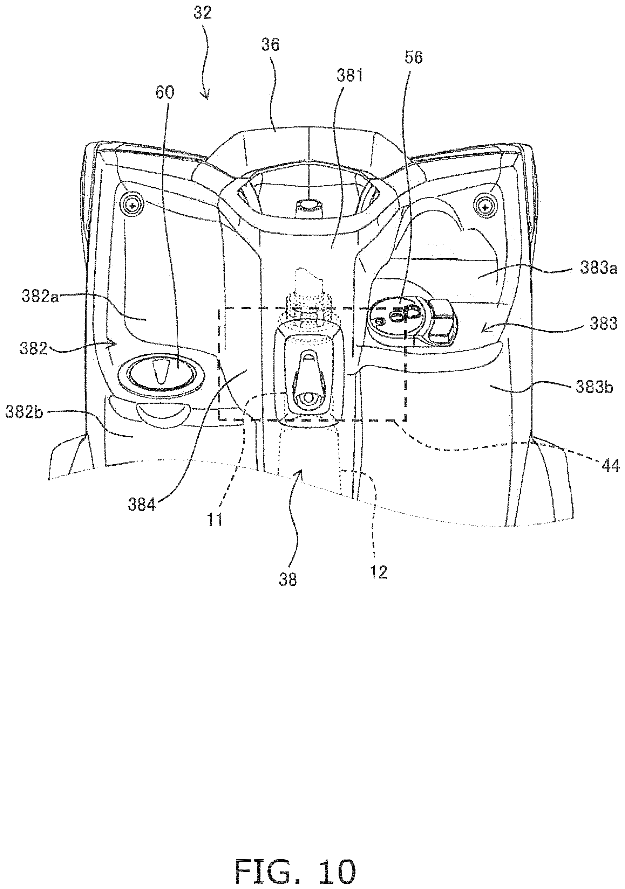

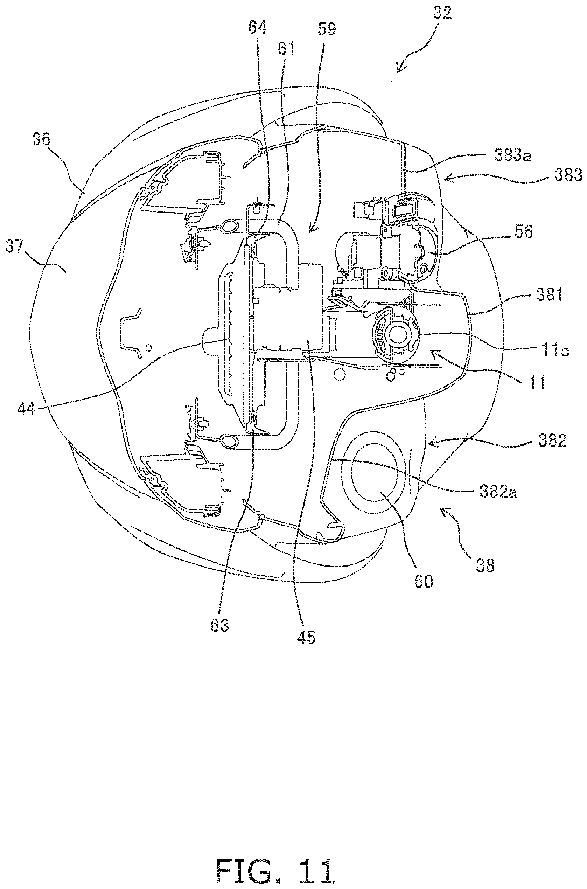

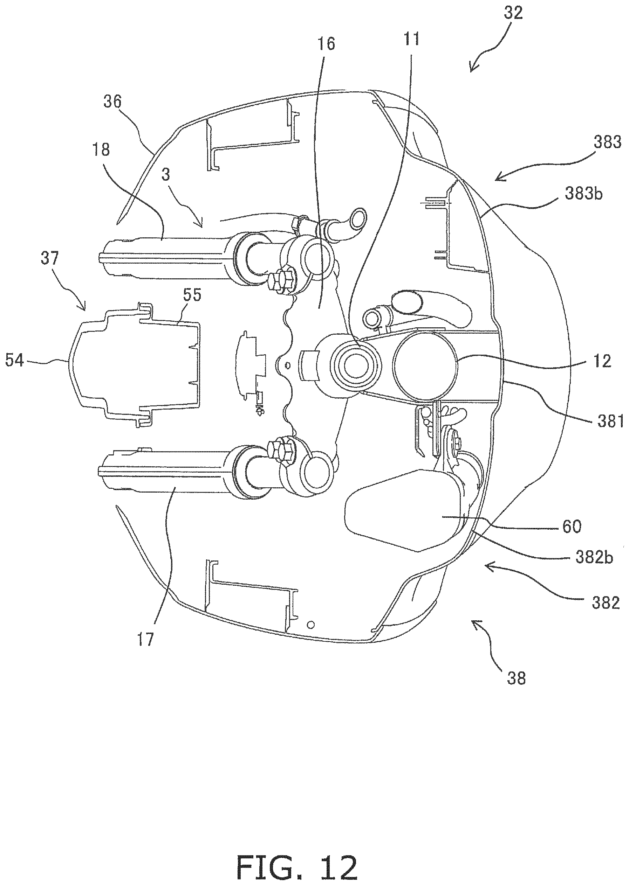

The engine control unit 44 is disposed in the aforementioned inner space S of the head pipe storage portion 32. FIG 9 is a perspective view of the head pipe storage portion 32. FIG 10 is a rear view of the head pipe storage portion 32. FIG 11 is a cross-sectional view of FIG 4 taken along line XI-XI. FIG 12 is a cross-sectional view of FIG 4 taken along line XII-XII.

As shown in FIGS. 9 and 10, the back cover 38 includes a middle portion 381, a left lateral portion 382 and a right lateral portion 383. The middle portion 381 overlaps the head pipe 11 as seen in the rear view. The left lateral portion 382 is located laterally leftward of the middle portion 381. The left lateral portion 382, at least in part, is located forward of the rear end edge 11c of the head pipe 11. The right lateral portion 383 is located laterally rightward of the middle portion 381. The right lateral portion 383, at least in part, is located forward of the rear end edge 11c of the head pipe 11.

The back cover 38 is provided with an fuel supply portion 60. As seen in the vehicle plan view, the fuel supply portion 60 is disposed on one of the lateral sides of the head pipe 11. Detailedly, as seen in the vehicle plan view, the fuel supply portion 60 is disposed on the left side of the head pipe 11. The fuel supply portion 60 is provided in the left lateral portion 382. The left lateral portion 382 includes a left upper portion 382a and a left lower portion 382b. The left upper portion 382a has a shape forwardly recessed from the left lower portion 382b. The fuel supply portion 60 is provided in the left upper portion 382a. As shown in FIG 11, the left upper portion 382a is located forward of the rear end edge 11c of the head pipe 11.

The back cover 38 is provided with a main switch 56. As seen in the vehicle plan view, the main switch 56 is disposed on the other of the lateral sides of the head pipe 11. Detailedly, as seen in the vehicle plan view, the main switch 56 is disposed on the right side of the head pipe 11. The main switch 56 is provided in the right lateral portion 383. The right lateral portion 383 includes a right upper portion 383a and a right lower portion 383b. The right upper portion 383a has a shape recessed further forward than the right lower portion 383b. The main switch 56 is provided in the right upper portion 383a. The right upper portion 383a is located forward of the rear end edge 11c of the head pipe 11. However, the layouts of the fuel supply portion 60 and the main switch 56 may be changed.

As seen in the vehicle plan view shown in FIG 11, the engine control unit 44 is disposed forward of the fuel supply portion 60. As seen in the vehicle plan view, the engine control unit 44 is disposed forward of the main switch 56.

As seen in the rear view shown in FIG 10, the back cover 38 includes an overlapping portion 384 that overlaps the engine control unit 44. The overlapping portion 384 extends across the middle portion 381, the left upper portion 382a and the right upper portion 383a. A region of the overlapping portion 384, included in the left upper portion 382a, is located forward of the rear end edge 11c of the head pipe 11. A region of the overlapping portion 384, included in the right upper portion 383a, is located forward of the rear end edge 11c of the head pipe 11.

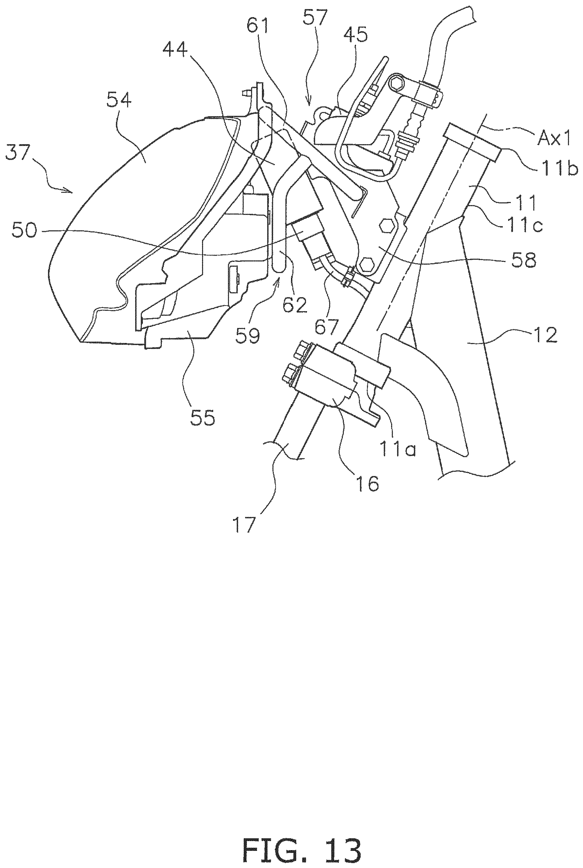

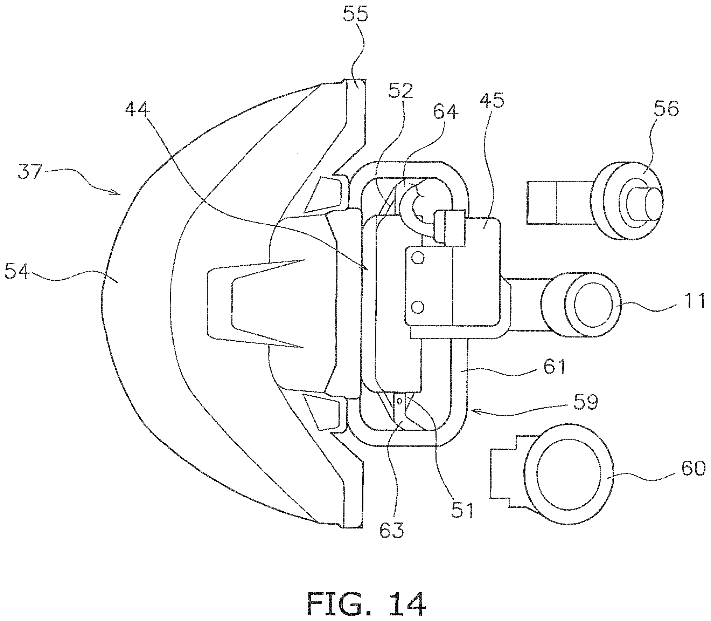

FIG 13 is a side view of a structure in the interior of the head pipe storage portion 32. FIG 14 is a top view of the structure in the interior of the head pipe storage portion 32. As shown in FIGS. 11 to 14, the engine control unit 44 is disposed between the head pipe 11 and the headlight 37 in the vehicle back-and-forth direction.

As seen in the vehicle side view shown in FIG. 13, the engine control unit 44 overlaps at least part of the headlight 37. Detailedly, the headlight 37 includes a clear cover 54 and a housing 55. The clear cover 54 is made of material with translucency. The clear cover 54 in part is exposed to the outside through the head pipe storage portion 32. The housing 55 is disposed behind the clear cover 54. As seen in the vehicle side view, the engine control unit 44 overlaps the housing 55.

The upper end of the engine control unit 44 is located below that of the head pipe 11. The lower end of the engine control unit 44 is located above that of the head pipe 11. The lower end of the engine control unit 44 is located above the under bracket 16.

As shown in FIG 14, the engine control unit 44 is smaller than the headlight 37 in the vehicle width direction. As seen in the vehicle plan view, the right and left end portions of the engine control unit 44 are located inside those of the headlight 37 in the vehicle width direction. In other words, as seen in the vehicle plan view, the left end portion of the engine control unit 44 is located rightward of the left end portion of the headlight 37. As seen in the vehicle plan view, the right end portion of the engine control unit 44 is located leftward of the right end portion of the headlight 37.

As shown in FIG 13, the straddled vehicle 1 includes a stay 57 that fixes the headlight 37 to the head pipe 11. The engine control unit 44 is fixed to the stay 57. The stay 57 includes a first stay 58 and a second stay 59. The first stay 58 is attached to the head pipe 11. The first stay 58 extends forward from the head pipe 11. The second stay 59 is supported by the first stay 58. The headlight 37 is attached to the second stay 59.

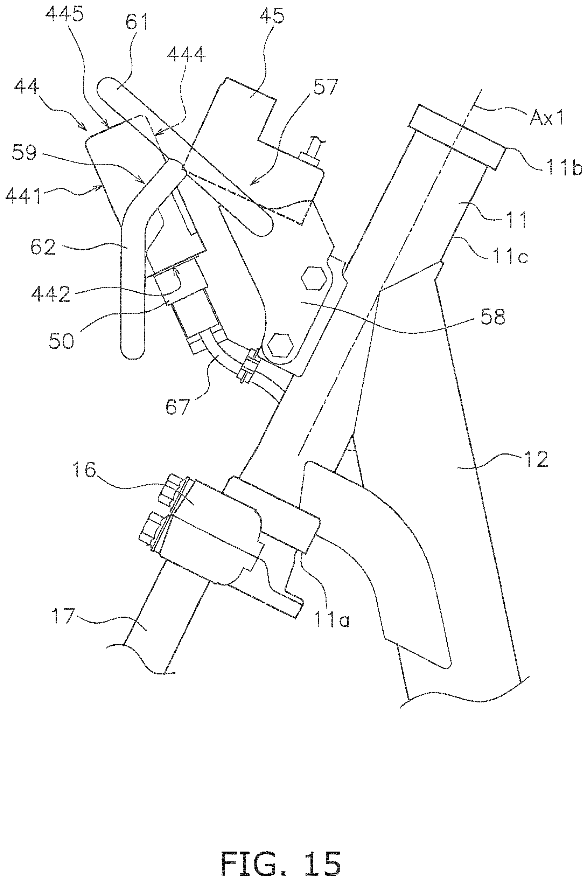

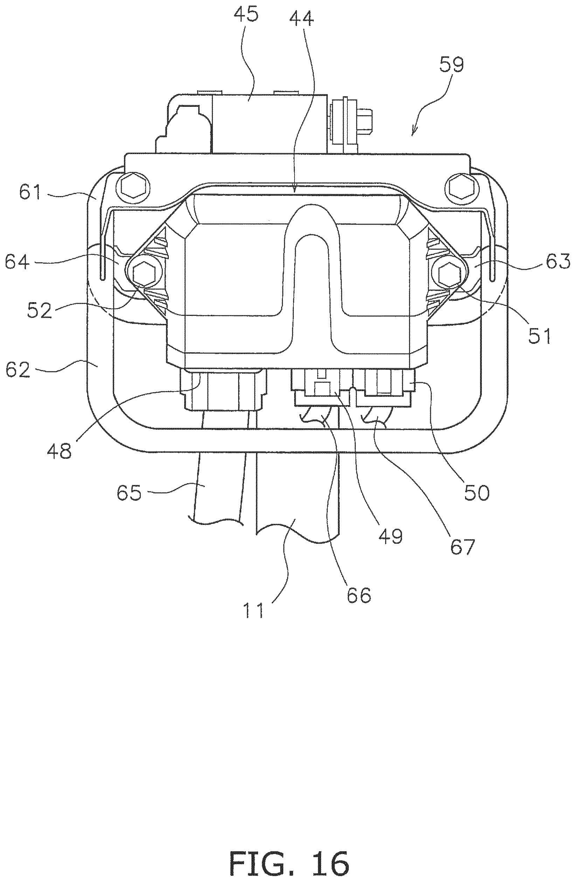

FIG 15 is a side view of the structure in the interior of the head pipe storage portion 32 from which the headlight 37 is omitted. FIG 16 is a front view of the structure in the interior of the head pipe storage portion 32 from which the headlight 37 is omitted. As shown in FIGS. 15 and 16, the second stay 59 includes a first support portion 61 and a second support portion 62. The first support portion 61 is attached to the first stay 58. The first support portion 61 has a bent annular shape. As seen in the vehicle side view, the first support portion 61 extends forward and upward from the first stay 58.

The second support portion 62 is bent in a U-shape as seen in the vehicle front view. The second support portion 62 is connected at the both ends thereof to the first support portion 61. As seen in the vehicle side view, the second support portion 62 extends downward from the first support portion 61. The headlight 37 is attached to the first and second support portions 61 and 62.

The engine control unit 44 is attached to the first support portion 61. Detailedly, the first support portion 61 includes a first protruding portion 63 and a second protruding portion 64. Each of the first and second protruding portions 63 and 64 protrudes inward from the first support portion 61 in the vehicle width direction. The first attachment portion 51 of the engine control unit 44 is attached to the first protruding portion 63 by fixation means such as a bolt and so forth. The second attachment portion 52 of the engine control unit 44 is attached to the second protruding portion 64 by fixation means such as a bolt and so forth.

As shown in FIG. 16, a plurality of electric cables 65 to 67 are connected to the engine control unit 44. The plural electric cables 65 to 67 are connected to the first to third connectors 48 to 50, respectively. The electric cable 65, connected to the first connector 48, is a harness composed of a plurality of communication wirings bundled together. The plural communication wirings in part are connected to a variety of sensors such as a sensor for detecting engine rotational speed. The plural communication wirings in part are connected to devices such as a fuel injection device and a spark plug in the engine 26.

The electric cables 66 and 67, connected to the second and third connectors 49 and 50 respectively, are connected to the starter motor 41 and a battery not shown in the drawings. The electric cable 65 connected to the first connector 48 is thicker than the electric cable 66 connected to the second connector 49. The electric cable 65 connected to the first connector 48 is thicker than the electric cable 66 connected to the third connector 50.

The electric cables 65 to 67 extend downward and backward from the engine control unit 44. The electric cables 65 to 67 extend from the engine control unit 44 toward the head pipe 11. The electric cables 65 to 67 extend downward along the down frame 12, although this structure is not shown in the drawings.

As shown in FIG 4, the straddled vehicle 1 includes a fluid pressure unit 45 for anti-lock brake system (ABS). The fluid pressure unit 45 is disposed inside the head pipe storage portion 32. Detailedly, the fluid pressure unit 45 is disposed inside the front cover 36. The fluid pressure unit 45 is connected to a brake hose extending from the front brake 19. The fluid pressure unit 45 is connected to a brake hose extending from the master cylinder 20. The fluid pressure unit 45 is connected to the engine control unit 44 through the communication wiring. The fluid pressure unit 45 controls the front brake 19.

The fluid pressure unit 45 is disposed in front of the head pipe 11. The fluid pressure unit 45 is disposed between the headlight 37 and the head pipe 11 in the vehicle back-and-forth direction. The fluid pressure unit 45 is disposed between the head pipe 11 and the engine control unit 44 in the vehicle back-and-forth direction. The fluid pressure unit 45 is disposed behind the engine control unit 44. The fluid pressure unit 45 is attached to the first stay 58.

As shown in FIG 15, the lower end of the fluid pressure unit 45 is located above that of the engine control unit 44. The upper end of the fluid pressure unit 45 is located above that of the engine control unit 44. The front end of the fluid pressure unit 45 is located forward of the rear end of the engine control unit 44. The rear end of the fluid pressure unit 45 is located backward of that of the engine control unit 44.

As seen in the vehicle front view shown in FIG 2, the fluid pressure unit 45 overlaps at least part of the head pipe 11. The fluid pressure unit 45 overlaps the engine control unit 44 as seen in the vehicle front view.

As seen in the vehicle top view shown in FIG 14, the fluid pressure unit 45 overlaps at least part of the engine control unit 44. The fluid pressure unit 45 overlaps at least part of the head pipe 11 as seen in the vehicle top view. The fluid pressure unit 45 is smaller than the engine control unit 44 in the vehicle width direction. The left end portion of the fluid pressure unit 45 is located rightward of the left end portion of the engine control unit 44. The right end portion of the fluid pressure unit 45 is located leftward of the right end portion of the engine control unit 44.

In the straddled vehicle 1 according to the present preferred embodiment explained above, the engine control unit 44 is disposed in front of the head pipe 11 and overlaps at least part of the head pipe 11 as seen in the vehicle front view. Air, flowing into the inner space S of the head pipe storage portion 32 through the opened portion 322, flows upward along the head pipe 11, and is thus likely to flow in the axis direction (Ax1) of the head pipe 11. Therefore, the first heat radiating surface 441 of the engine control unit 44 extends in the direction intersecting with the axis direction (Ax1) of the head pipe 11 as seen in the vehicle side view, whereby the air, flowing through the opened portion 322, is likely to strike the engine control unit 44. Accordingly, the engine control unit 44 can be enhanced in heat radiating performance.

The axis Ax1 of the head pipe 11 extends backward and upward as seen in the vehicle side view. The first heat radiating surface 441 of the engine control unit 44 extends forward and upward as seen in the vehicle side view. Therefore, the air, flowing backward and upward from the opened portion 322, is likely to strike the engine control unit 44. Accordingly, the engine control unit 44 can be further enhanced in heat radiating performance.

The area of the first heat radiating surface 441 projected in the normal direction of the first heat radiating surface 441 is greater than the area of the first lateral surface 442 projected in the normal direction of the first lateral surface 442. Therefore, the first heat radiating surface 441, having a large projected area in the engine control unit 44, extends in the direction intersecting with the axis direction (Ax1) of the head pipe 11. Accordingly, the engine control unit 44 can be further enhanced in heat radiating performance by the air flowing thereto through the opened portion 322.

The first heat radiating surface 441 extends forward and upward as seen in the vehicle side view. Therefore, the air, flowing backward and upward from the opened portion 322, is likely to strike the first heat radiating surface 441 having a large projected area. Accordingly, the engine control unit 44 can be further enhanced in heat radiating performance by the air flowing thereto through the opened portion 322.

The connectors 48 to 50, to which the electric cables 65 to 67 are connected, are provided on the first lateral surface 442. The first lateral surface 442 is the lower surface of the engine control unit 44. Therefore, it is possible to easily employ the layouts of the electric cables 65 to 67 extending downward from the first lateral surface 442. Accordingly, handling of the electric cables 65 to 67 is made easy.

The first heat radiating surface 441 has a raised and recessed shape. Therefore, the surface area of the first heat radiating surface 441 is increased, whereby the engine control unit 44 can be further enhanced in heat radiating performance.

The first heat radiating surface 441 is dimensioned to be greater in the width direction than in the length direction. Additionally, the engine control unit 44 is disposed such that the width direction (X) of the first heat radiating surface 441 is oriented in the vehicle width direction. Accordingly, the engine control unit 44 can be compactly disposed inside the head pipe storage portion 32 in the vehicle up-and-down direction.

The upper end of the engine control unit 44 is located below that of the head pipe 11. Accordingly, the engine control unit 44 can be compactly disposed inside the head pipe storage portion 32 in the vehicle up-and-down direction.

The engine control unit 44 is disposed between the head pipe 11 and the headlight 37 in the vehicle back-and-forth direction. The engine control unit 44 at least in part overlaps the headlight 37 in the vehicle front view. Because of this, the inner space S of the head pipe storage portion 32 is reduced by the headlight 37, whereby deterioration in heat radiating performance is greatly concerned. Therefore, the significance of the present invention is highly appreciated.

The engine control unit 44 is fixed to the stay 57 by which the headlight 37 is fixed to the head pipe 11. Therefore, attachment of the headlight 37 and the engine control unit 44 can be made by the stay 57 commonly used.

The engine control unit 44 includes the command unit 46 and the voltage control unit 47. The voltage control unit 47 is a unit for controlling voltage, and hence, generates a large amount of heat. In the straddled vehicle 1 according to the present preferred embodiment, the engine control unit 44 is disposed as described above, whereby the heat generated by the voltage control unit 47 can be efficiently cooled.

The command unit 46 and the voltage control unit 47 are disposed in alignment in the width direction (X) of the first heat radiating surface 441. Therefore, wiring between the command unit 46 and the voltage control unit 47 is made easier than when the command unit 46 and the voltage control unit 47 are laminated in the thickness direction (Z). Additionally, the engine control unit 44 is provided with a large surface, whereby it can be made easy for air flowing through the opened portion 322 to strike the engine control unit 44.

The back cover 38 includes the overlapping portion 384 overlapping the engine control unit 44 as seen in the rear view. The overlapping portion 384 is at least in part located forward of the rear end edge 11c of the head pipe 11. In this case, the space directly backward of the engine control unit 44 is small. Therefore, it is difficult for traveling wind to pass therethrough, and also, the space for heat radiation is small. Hence, deterioration in heat radiating performance is greatly concerned. Therefore, the significance of the present invention is highly appreciated.

The upper end of the left shock absorber 17 and that of the right shock absorber 18 are connected to the under bracket 16 disposed below the head pipe 11. In other words, the straddled vehicle 1 does not include an upper bracket, and the right and left shock absorbers 18 and 17 are coupled through the under bracket 16. Therefore, the right and left shock absorbers 18 and 17 are not disposed rightward and leftward of the head pipe 11. Because of this, the space located right and left of the head pipe 11 can be utilized as a space for discharging heat of the engine control unit 44. Accordingly, the engine control unit 44 can be enhanced in heat radiating performance. However, the straddled vehicle 1 may include the upper bracket.

One preferred embodiment of the present invention has been explained above. However, the present invention is not limited to the aforementioned preferred embodiment, and a variety of changes can be made without departing from the scope of the appended claims.

The straddled vehicle 1 is not limited to a scooter-type vehicle, and alternatively, may be another type of vehicle such as a moped. The number of the front wheels is not limited to one, and alternatively, may be two or greater. Instead of this, the number of the rear wheels is not limited one, and alternatively, may be two or greater.

The engine control unit 44 may not include the voltage control unit 47. The engine control unit 44 may have a control function such as an idling stop function. The idling stop function is a function of automatically stopping the engine 26 when the vehicle stops moving and automatically restarting the engine 26 when the vehicle starts moving. When having such a control function as described above, the engine control unit 44 tends to be increased in size and be increased in amount of heat generated therefrom with increase in amount of processing. Therefore, as with the aforementioned preferred embodiment, it is effective to enhance the heat radiating performance of the engine control unit 44.

The structure of the engine control unit 44 is not limited to that in the aforementioned preferred embodiment. For example, the engine control unit 44 may have a shape dimensioned to be greater in the length direction (Y) than in the width direction (X). The first heat radiating surface 441 is not limited to the front surface of the engine control unit 44, and alternatively, may be the rear surface or another surface of the engine control unit 44. The first lateral surface 442 is not limited to the lower surface of the engine control unit 44, and alternatively, may be another surface such as the upper surface of the engine control unit 44.

The number of connectors of the engine control unit 44 is not limited to three, and alternatively, may be less than three or may be greater than three. In the engine control unit 44, the surface on which the connectors are disposed is not limited to the lower surface, and alternatively, may be another surface.

The structure of the stay 57 is not limited to that in the aforementioned preferred embodiment, and may be changed. The layout of the fluid pressure unit 45 is not limited to that in the aforementioned preferred embodiment, and may be changed. For example, the fluid pressure unit 45 may be disposed in a different place from the interior of the head pipe storage portion 32. Alternatively, the fluid pressure unit 45 may be omitted.

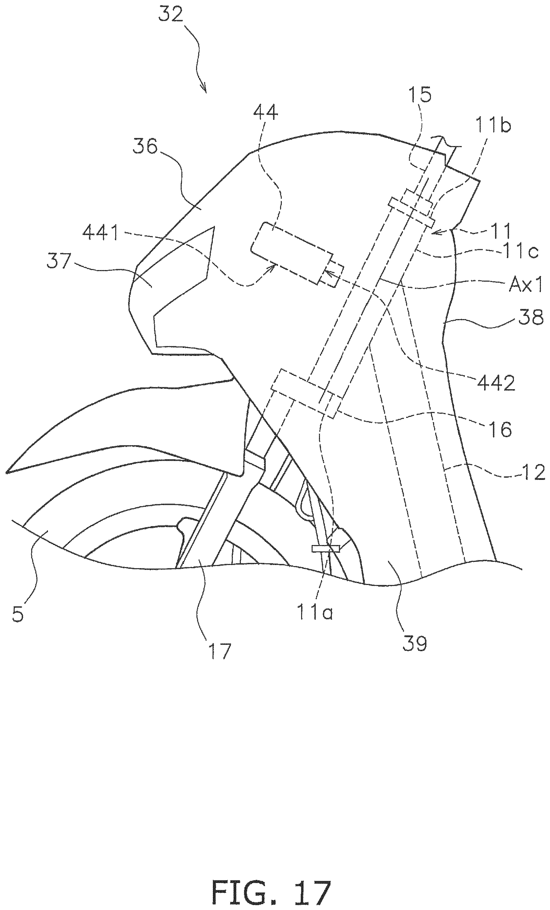

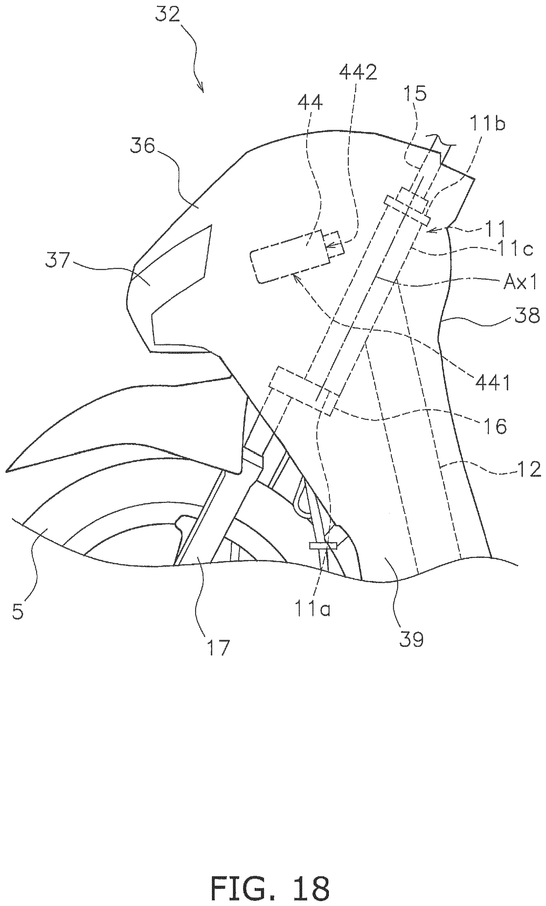

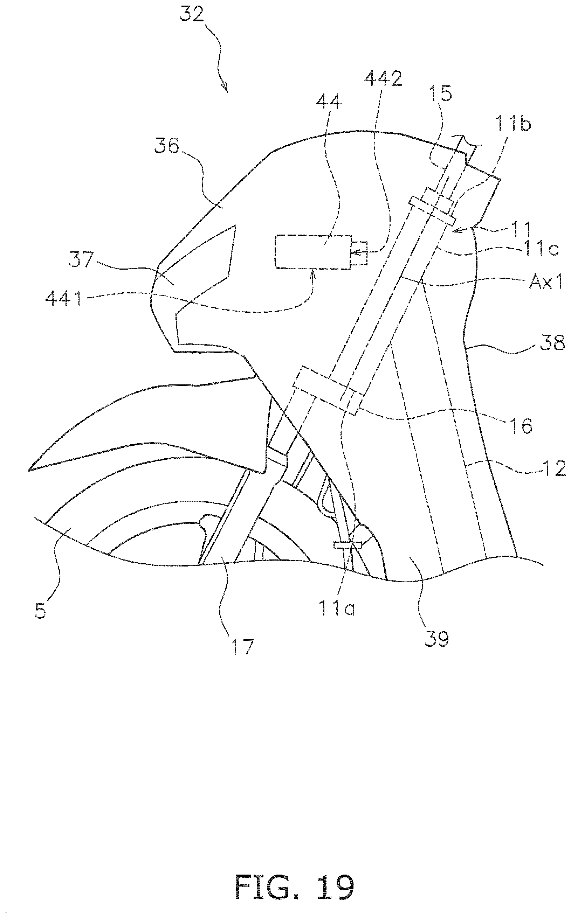

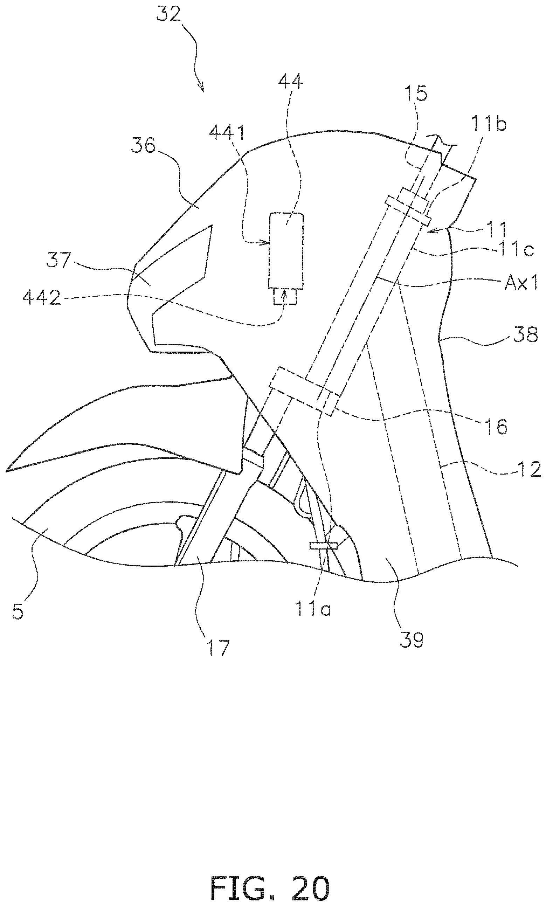

The layout of the engine control unit 44 is not limited to that in the aforementioned preferred embodiment. For example, as seen in a vehicle side view shown in FIG. 17, the first heat radiating surface 441 of the engine control unit 44 may extend in a perpendicular direction to the axis direction (Ax1) of the head pipe 11. Alternatively, as seen in a vehicle side view shown in FIG. 18, the first heat radiating surface 441 of the engine control unit 44 may extend forward and downward, and simultaneously, may extend in a direction intersecting with the axis direction (Ax1) of the head pipe 11. Yet alternatively, as seen in a vehicle side view shown in FIG. 19, the first heat radiating surface 441 of the engine control unit 44 may extend in a horizontal direction. Further yet alternatively, as seen in a vehicle side view shown in FIG 20, the first heat radiating surface 441 of the engine control unit 44 may extend in the vehicle up-and-down direction. The headlight 37 may be provided in the handle cover 31 not in the front cover 36.

## Claims

1. A straddled vehicle (1) comprising:
a vehicle body frame (2) including a head pipe (11);
a steering device (3) supported by the head pipe (11);
an engine (26) disposed below and backward of the head pipe (11);
a head pipe storage portion (32) including a front cover (36) and a back cover (38), the front cover (36) being at least in part disposed in front of the head pipe (11), the back cover (38) being at least in part disposed behind the head pipe (11), the front cover (36) and the back cover (38) forming therebetween an inner space (S) in which the head pipe (11) is accommodated; and
an engine control unit (44) configured to control the engine (26), wherein
the head pipe (11) extends backward from a lower opening end (11a) thereof to an upper opening end (11b) thereof,
the head pipe storage portion (32) includes an opened portion (322) provided below the head pipe (11),
the steering device (3) extends outward from the inner space (S) through the opened portion (322),
the back cover (38) includes a middle portion (381), a left lateral portion (382) and a right lateral portion (383), the middle portion (381) overlapping the head pipe (11) as seen in a rear view, the left lateral portion (382) being located laterally leftward of the middle portion (381), the right lateral portion (383) being located laterally rightward of the middle portion (381), at least one of the left lateral portion (382) and the right lateral portion (383) being located forward of a rear end edge (11c) of the head pipe (11),
the engine control unit (44) is disposed in front of the head pipe (11) in the inner space (S) of the head pipe storage portion (32),
the axis (Ax1) of the head pipe (11) extends backward and upward as seen in the vehicle side view, and
the engine control unit (44) is dimensioned to be greater in both a length direction thereof and a width direction thereof than in a thickness direction thereof,
**characterized in that**
the engine control unit (44) overlaps at least part of the head pipe (11) as seen in a vehicle front view,
the engine control unit (44) includes a main heat radiating surface (441,444), the main heat radiating surface (441,444) extending in both the length direction and the width direction as seen in the thickness direction,
the main heat radiating surface (441,444) extends in a direction intersecting with a direction of an axis of the head pipe (11) as seen in a vehicle side view, and
the main heat radiating surface (441,444) extends forward and upward as seen in the vehicle side view, and
the thickness direction extends forward and downward as seen in the vehicle side view.

2. The straddled vehicle (1) according to claim 1, wherein
the engine control unit (44) further includes a lateral surface (442,443,445,446) extending in the thickness direction of the engine control unit (44), and
an area of the main heat radiating surface (441,444) projected in a normal direction of the main heat radiating surface (441,444) is greater than an area of the lateral surface (442,443,445,446) projected in a normal direction of the lateral surface (442,443,445,446).

3. The straddled vehicle (1) according to claim 2, further comprising:
an electric cable (65-67) connected to the engine control unit (44), wherein
the lateral surface (442) includes a connector (48-50) to which the electric cable (65-67) is connected.

4. The straddled vehicle (1) according to any of claim 2 or 3, wherein
the main heat radiating surface (441,444) is a front or rear surface (441,444) of the engine control unit (44), and
the lateral surface (442) is a lower surface connected to a lower end of the main heat radiating surface (441,444).

5. The straddled vehicle (1) according to any of claims 1 to 4, wherein the main heat radiating surface (441,444) has a raised and recessed shape.

6. The straddled vehicle (1) according to any of claims 1 to 5, wherein
the main heat radiating surface (441,444) is dimensioned to be greater in the width direction than in the length direction, and
the engine control unit (44) is disposed such that the width direction of the main heat radiating surface (441,444) is oriented in the vehicle width direction.

7. The straddled vehicle (1) according to any of claims 1 to 6, wherein an upper end of the engine control unit (44) is located below the upper opening end (11b) of the head pipe (11).

8. The straddled vehicle (1) according to any of claims 1 to 7, further comprising:
a headlight (37) disposed forward of the head pipe (11), wherein
the engine control unit (44) is disposed between the head pipe (11) and the headlight (37) in a vehicle back-and-forth direction, and
the engine control unit (44) at least in part overlaps the headlight (37) in the vehicle front view.

9. The straddled vehicle (1) according to claim 8, further comprising:
a stay for fixing the headlight (37) to the head pipe (11), wherein
the engine control unit (44) is fixed to the stay.

10. The straddled vehicle (1) according to any of claims 1 to 9, further comprising:
a starter motor (41) for starting the engine (26), wherein
the engine control unit (44) includes
a command unit (46) outputting a command signal to the engine (26), and
a voltage control unit (47) connected to the starter motor (41).

11. The straddled vehicle (1) according to claim 10, wherein the command unit (46) and the voltage control unit (47) are disposed in alignment in either the width direction or the length direction of the main heat radiating surface (441,444).

12. The straddled vehicle (1) according to any of claims 1 to 11, wherein
the back cover (38) includes an overlapping portion (384) overlapping the engine control unit (44) as seen in the rear view, and
the overlapping portion (384) is at least in part located forward of the rear end edge (11c) of the head pipe (11).

13. The straddled vehicle (1) according to any of claims 1 to 12, further comprising:
an fuel supply portion (60) provided in either the right lateral portion (383) or the left lateral portion (382).

14. The straddled vehicle (1) according to any of claims 1 to 13, further comprising:
a main switch (56) provided in either the right lateral portion (383) or the left lateral portion (382).

## Patentansprüche

1. Spreizsitz-Fahrzeug (1), das umfasst:
einen Fahrzeug-Karosserierahmen (2), der ein Steuerrohr (11) enthält;
eine Lenkvorrichtung (3), die von dem Steuerrohr (11) getragen wird;
einen Motor (26), der unterhalb des Steuerrohrs (11) und hinter ihm angeordnet ist;
einen Steuerrohr-Aufnahmeabschnitt (32), der eine vordere Abdeckung (36) und eine hintere Abdeckung (38) enthält, wobei die vordere Abdeckung (36) wenigstens teilweise vor dem Steuerrohr (11) angeordnet ist, die hintere Abdeckung (38) wenigstens teilweise hinter dem Steuerrohr (11) angeordnet ist und zwischen der vorderen Abdeckung (36) und der hinteren Abdeckung (38) ein Innenraum (S) ausgebildet ist, in dem das Steuerrohr (11) aufgenommen wird; sowie
eine Motorsteuerungs-Einheit (44), die zum Steuern des Motors (26) ausgeführt ist, wobei
das Steuerrohr (11) sich von einem unteren Öffnungsende (11a) desselben zu einem oberen Öffnungsende (11b) desselben nach hinten erstreckt,
der Steuerrohr-Aufnahmeabschnitt (32) einen offenen Abschnitt (322) enthält, der unterhalb des Steuerrohrs (11) vorhanden ist,
die Lenkvorrichtung (3) sich aus dem Innenraum (S) durch den offenen Abschnitt (322) hindurch nach außen erstreckt,
die hintere Abdeckung (38) einen mittleren Abschnitt (381), einen linken seitlichen Abschnitt (382) sowie einen rechten seitlichen Abschnitt (383) umfasst, wobei der mittlere Abschnitt (381), in einer Rückansicht gesehen, das Steuerrohr (11) überdeckt, der linke seitliche Abschnitt (382) seitlich links von dem mittleren Abschnitt (381) angeordnet ist, der rechte seitliche Abschnitt (383) seitlich rechts von dem mittleren Abschnitt (381) angeordnet ist, und der linke seitliche Abschnitt (382) oder/und der rechte seitliche Abschnitt (383) vor einer hinteren Endkante (11c) des Steuerrohrs (11) angeordnet ist/sind,
die Motorsteuerungs-Einheit (44) vor dem Steuerrohr (11) in dem Innenraum (S) des Steuerrohr-Aufnahmeabschnitts (32) angeordnet ist,
die Achse (Ax1) des Steuerrohrs (11) in der Fahrzeug-Seitenansicht gesehen, nach hinten und nach oben verläuft, und
die Motorsteuerungs-Einheit (44) so dimensioniert ist, dass sie sowohl in ihrer Längenrichtung als auch in ihrer Breitenrichtung größer ist als in ihrer Dickenrichtung,
**dadurch gekennzeichnet, dass**
die Motor Steuerungs-Einheit (44), in einer Fahrzeug-Vorderansicht gesehen, wenigstens einen Teil des Steuerrohrs (11) überdeckt,
die Motorsteuerungs-Einheit (44) eine Haupt-Wärmeabstrahlfläche (441, 444) enthält, wobei sich die Haupt-Wärmeabstrahlfläche (441, 444), in der Dickenrichtung gesehen, sowohl in der Längenrichtung als auch in der Breitenrichtung erstreckt,
die Haupt-Wärmeabstrahlfläche (441, 444), in einer Fahrzeug-Seitenansicht gesehen, sich in einer Richtung erstreckt, die sich mit einer Richtung einer Achse des Steuerrohrs (11) schneidet, und
die Haupt-Wärmeabstrahlfläche (441, 444), in der Fahrzeug-Seitenansicht gesehen, sich nach vorn und nach oben erstreckt, und
die Dickenrichtung, in der Fahrzeug-Seitenansicht gesehen, sich nach vorn und nach unten erstreckt.

2. Spreizsitz-Fahrzeug (1) nach Anspruch 1, wobei
die Motorsteuerungs-Einheit (44) des Weiteren eine Seitenfläche (442, 443, 445, 446) enthält, die sich in der Dickenrichtung der Motorsteuerungs-Einheit (44) erstreckt, und
eine Flächenausdehnung der Haupt-Wärmeabstrahlfläche (441, 444), projiziert in einer Normalrichtung der Haupt-Wärmeabstrahlfläche (441, 444), größer ist als eine Flächenausdehnung der Seitenfläche (442, 443, 445, 446), projiziert in einer Normalrichtung der Seitenfläche (442, 443, 445, 446).

3. Spreizsitz-Fahrzeug (1) nach Anspruch 2, das des Weiteren umfasst:
ein elektrisches Kabel (65-67), das mit der Motorsteuerungs-Einheit (44) verbunden ist, wobei
die Seitenfläche (442) einen Verbinder (48-50) enthält, mit dem das elektrische Kabel (65-67) verbunden ist.

4. Spreizsitz-Fahrzeug (1) nach einem der Ansprüche 2 oder 3, wobei
die Haupt-Wärmeabstrahlfläche (441, 444) eine vordere oder hintere Fläche (441, 444) der Motorsteuerungs-Einheit (44) ist, und
die Seitenfläche (442) eine untere Fläche ist, die mit einem unteren Ende der Haupt-Wärmeabstrahlfläche (441, 444) verbunden ist.

5. Spreizsitz-Fahrzeug (1) nach einem der Ansprüche 1 bis 4, wobei die Haupt-Wärmeabstrahlfläche (441, 444) eine erhabene und vertiefte Form hat.

6. Spreizsitz-Fahrzeug (1) nach einem der Ansprüche 1 bis 5, wobei
die Haupt-Wärmeabstrahlfläche (441, 444) so dimensioniert ist, dass sie in der Breitenrichtung größer ist als in der Längenrichtung, und
die Motorsteuerungs-Einheit (44) so angeordnet ist, dass die Breitenrichtung der Haupt-Wärmeabstrahlfläche (441, 444) in der Fahrzeug-Breitenrichtung ausgerichtet ist.

7. Spreizsitz-Fahrzeug (1) nach einem der Ansprüche 1 bis 6, wobei ein oberes Ende der Motorsteuerungs-Einheit (44) unterhalb des oberen Öffnungsendes (11b) des Steuerrohrs (11) angeordnet ist.

8. Spreizsitz-Fahrzeug (1) nach einem der Ansprüche 1 bis 7, das des Weiteren umfasst:
einen Scheinwerfer (37), der vor dem Steuerrohr (11) angeordnet ist, wobei
die Motorsteuerungs-Einheit (44) in einer Fahrzeug-Längsrichtung zwischen dem Steuerrohr (11) und dem Scheinwerfer (37) angeordnet ist, und
die Motorsteuerungs-Einheit (44) den Scheinwerfer (37) in der Fahrzeug-Vorderansicht wenigstens teilweise überdeckt.

9. Spreizsitz-Fahrzeug (1) nach Anspruch 8, das des Weiteren umfasst:
eine Strebe zum Befestigen des Scheinwerfers (37) an dem Steuerrohr (11), wobei die Motorsteuerungs-Einheit (44) an der Strebe befestigt ist.

10. Spreizsitz-Fahrzeug (1) nach einem der Ansprüche 1 bis 9, das des Weiteren umfasst:
einen Anlasser (41) zum Starten des Motors (26), wobei
die Motorsteuerungs-Einheit (44) enthält:
eine Befehls-Einheit (46), die ein Befehlssignal an den Motor (26) ausgibt, und
eine Spannungssteuerungs-Einheit (47), die mit dem Anlasser (41) verbunden ist.

11. Spreizsitz-Fahrzeug (1) nach Anspruch 10, wobei die Befehls-Einheit (46) und die Spannungssteuerungs-Einheit (47) entweder in der Breitenrichtung oder in der Längenrichtung der Haupt-Wärmeabstrahlfläche (441, 444) fluchtend angeordnet sind.

12. Spreizsitz-Fahrzeug (1) nach einem der Ansprüche 1 bis 11, wobei
die hintere Abdeckung (38) einen Überdeckungsabschnitt (384) enthält, der, in der Rückansicht gesehen, die Motorsteuerungs-Einheit (44) überdeckt, und
der Überdeckungsabschnitt (384) wenigstens teilweise vor der hinteren Endkante (11c) des Steuerrohrs (11) angeordnet ist.

13. Spreizsitz-Fahrzeug (1) nach einem der Ansprüche 1 bis 12, das des Weiteren umfasst:
einen Kraftstoff-Zuführabschnitt (60), der entweder in dem rechten seitlichen Abschnitt (383) oder dem linken seitlichen Abschnitt (382) vorhanden ist.

14. Spreizsitz-Fahrzeug (1) nach einem der Ansprüche 1 bis 13, das des Weiteren umfasst:
einen Hauptschalter (56), der entweder in dem rechten seitlichen Abschnitt (383) oder dem linken seitlichen Abschnitt (382) vorhanden ist.

## Revendications

1. Véhicule à enfourcher (1) comprenant:
un châssis de carrosserie (2) comprenant un tuyau de tête (11);
un dispositif de direction (3) supporté par le tuyau de tête (11);
un moteur (26) disposé en dessous et à l'arrière du tuyau de tête (11);
une partie (32) de stockage du tuyau de tête comprenant un capot avant (36) et un capot arrière (38), le capot avant (36) étant au moins en partie disposé devant le tuyau de tête (11), le capot arrière (38) étant au moins en partie disposé derrière le tuyau de tête (11), le capot avant (36) et le capot arrière (38) formant entre eux un espace intérieur (S) dans lequel le tuyau de tête (11) est logé; et
une unité de commande de moteur (44) configurée pour commander le moteur (26), dans laquelle
le tuyau de tête (11) s'étend vers l'arrière depuis une extrémité d'ouverture inférieure (11a) de celui-ci jusqu'à une extrémité d'ouverture supérieure (11b) de celui-ci,
la partie de stockage du tuyau de tête (32) comprend une partie ouverte (322) prévue sous le tuyau de tête (11),
le dispositif de direction (3) s'étend vers l'extérieur depuis l'espace intérieur (S) à travers la partie ouverte (322),
le capot arrière (38) comprend une partie centrale (381), une partie latérale gauche (382) et une partie latérale droite (383), la partie centrale (381) chevauchant le tuyau de tête (11) comme on le voit dans un rétroviseur, la partie latérale gauche (382) étant située latéralement à gauche de la partie centrale (381), la partie latérale droite (383) étant située latéralement à droite de la partie centrale (381), au moins l'une des parties latérales gauche (382) et droite (383) étant située en avant d'un bord d'extrémité arrière (11c) du tuyau de tête (11),
l'unité de commande du moteur (44) est disposée devant le tuyau de tête (11) dans l'espace intérieur (S) de la partie de stockage du tuyau de tête (32),
l'axe (Ax1) du tuyau de tête (11) s'étend vers l'arrière et vers le haut, comme on peut le voir sur la vue latérale du véhicule, et
l'unité de commande du moteur (44) est dimensionnée pour être plus grande dans le sens de la longueur et dans le sens de la largeur que dans le sens de l'épaisseur,
**caractérisé en ce que**
l'unité de commande du moteur (44) chevauche au moins une partie du tuyau de tête (11), comme on peut le voir dans une vue frontale du véhicule,
l'unité de commande du moteur (44) comprend une surface principale de rayonnement thermique (441,444), la surface principale de rayonnement thermique (441,444) s'étendant à la fois dans le sens de la longueur et dans le sens de la largeur, vue dans le sens de l'épaisseur,
la surface principale de rayonnement de chaleur (441 444) s'étend dans une direction qui coupe celle d'un axe du tube de tête (11) tel que vu dans une vue latérale du véhicule, et
la principale surface de rayonnement thermique (441 444) s'étend vers l'avant et vers le haut, comme le montre la vue latérale du véhicule, et
la direction de l'épaisseur s'étend vers l'avant et vers le bas, comme on peut le voir sur la vue latérale du véhicule.

2. Véhicule à enfourcher (1) selon la revendication 1, dans lequel
l'unité de commande du moteur (44) comprend en outre une surface latérale (442 443 445 446) s'étendant dans le sens de l'épaisseur de l'unité de commande du moteur (44), et
une surface de la surface principale de rayonnement thermique (441 444) projetée dans une direction normale de la surface principale de rayonnement thermique (441 444) est supérieure à une surface de la surface latérale (442 443 445 446) projetée dans une direction normale de la surface latérale (442 443 445 446).

3. Véhicule à enfourcher (1) selon la revendication 2, comprenant en outre:
un câble électrique (65-67) connecté à l'unité de commande du moteur (44), dans lequel
la surface latérale (442) comporte un connecteur (48-50) auquel est connecté le câble électrique (65-67).

4. Véhicule à enfourcher (1) selon l'une des revendications 2 ou 3, dans lequel la principale surface de rayonnement thermique (441 444) est une surface avant ou arrière (441 444) de l'unité de commande du moteur (44), et
la surface latérale (442) est une surface inférieure reliée à une extrémité inférieure de la surface principale de rayonnement thermique (441 444).

5. Véhicule à enfourcher (1) selon l'une des revendications 1 à 4, dans lequel la principale surface de rayonnement de chaleur (441 444) a une forme en relief et en creux.

6. Véhicule à enfourcher (1) selon l'une des revendications 1 à 5, dans lequel la surface principale de rayonnement thermique (441 444) est dimensionnée de telle sorte qu'elle est plus grande dans le sens de la largeur que dans le sens de la longueur, et
l'unité de commande du moteur (44) est disposée de telle sorte que la direction de la largeur de la surface principale de rayonnement de chaleur (441 444) soit orientée dans le sens de la largeur du véhicule.

7. Véhicule à enfourcher (1) selon l'une des revendications 1 à 6, dans lequel une extrémité supérieure de l'unité de commande du moteur (44) est située sous l'extrémité supérieure de l'ouverture (11 b) du tuyau de tête (11).

8. Véhicule à enfourcher (1) selon l'une des revendications 1 à 7, comprenant en outre:
un phare (37) disposé à l'avant du tuyau de tête (11), dans lequel
l'unité de commande du moteur (44) est disposée entre le tube de tête (11) et le phare (37) dans un sens et dans l'autre du véhicule, et
l'unité de commande du moteur (44) chevauche au moins en partie le phare (37) dans la vue frontale du véhicule.

9. Véhicule à enfourcher (1) selon la revendication 8, comprenant en outre:
un support pour fixer le phare (37) au tube de direction (11), dans lequel l'unité de commande du moteur (44) est fixée sur le support.

10. Véhicule à enfourcher (1) selon l'une des revendications 1 à 9, comprenant en outre:
un démarreur (41) pour le démarrage du moteur (26), dans lequel l'unité de commande du moteur (44) comprend
une unité de commande (46) émettant un signal de commande vers le moteur (26), et
une unité de commande de la tension (47) reliée au démarreur (41).

11. Véhicule à enfourcher (1) selon la revendication 10, dans lequel l'unité de commande (46) et l'unité de commande de la tension (47) sont disposées en alignement soit dans le sens de la largeur, soit dans le sens de la longueur de la surface principale de rayonnement thermique (441,444).

12. Véhicule à enfourcher (1) selon l'une des revendications 1 à 11, dans lequel
le capot arrière (38) comprend une partie chevauchante (384) qui chevauche l'unité de commande du moteur (44) telle qu'elle est vue à l'arrière, et
la partie de chevauchement (384) est au moins en partie située en avant du bord d'extrémité arrière (11c) du tuyau de tête (11).

13. Véhicule à enfourcher (1) selon l'une des revendications 1 à 12, comprenant en outre:
une partie d'alimentation en carburant (60) prévue soit dans la partie latérale droite (383), soit dans la partie latérale gauche (382).

14. Véhicule à enfourcher (1) selon l'une des revendications 1 à 13, comprenant en outre:
un interrupteur principal (56) prévu soit dans la partie latérale droite (383), soit dans la partie latérale gauche (382).
